# FASCICULE DE BREVET EUROPEEN

(11) **EP 0 584 306 B1**
(45) Date de publication et mention de la délivrance du brevet: **28.06.1995**
(21) Numéro de dépôt: 93903787.5
(22) Date de dépôt: 08.03.1993
(51) Int. Cl.: B65D 1/02

(54) **RECIPIENT EN MATIERE SYNTHETIQUE ET PROCEDE DE FABRICATION D'UN TEL RECIPIENT**
KUNSTSTOFFBEHÄLTER UND VERFAHREN ZU SEINER HERSTELLUNG
CONTAINER MADE OF A SYNTHETIC MATERIAL AND METHOD FOR MAKING SAME

(30) Priorité: 12.03.1992 FR 9203138
(43) Date de publication de la demande: 02.03.1994
(73) Titulaire: JEAN GALLAY S.A., CH-1228 Plan-Les-Ouates Genève (CH)
(72) Inventeur: GALLAY, Pierre-Henri, CH-1245 Collonge (CH)
(74) Mandataire: Nithardt, Roland
(86) Numéro de dépôt international: CH9300059
(87) Numéro de publication internationale: WO9317918

(56) Documents cités:
- EP-A- 0 472 504

## Description

La présente invention concerne un récipient en matière synthétique comportant un fond fermé et une ouverture ménagée dans la partie supérieure opposée audit fond, et plus particulièrement un récipient en matière thermoplastique réalisé selon un procédé de soufflage, d'étirage-soufflage ou de thermoformage, sa paroi comportant au moins une ligne de pliage constituée par une zone linéaire étroite de la paroi.

Elle concerne également un procédé de fabrication d'un récipient en matière synthétique comportant un fond fermé et une ouverture ménagée dans la partie supérieure opposée audit fond, et plus particulièrement un récipient en matière thermoplastique réalisé par soufflage, étirage-soufflage ou thermoformage, ce récipient comportant au moins une ligne de pliage.

L'un des problèmes les plus cruciaux qui se posent actuellement dans les pays industrialisés est celui de l'élimination ou de la récupération des déchets, et notamment des déchets non biodégradables tels que par exemple une grande variété d'objets en matériaux synthétiques. Parmi ces objets figurent notamment des emballages et particulièrement les bouteilles en matière thermoplastique telle que par exemple le polyéthylène téréphtalate (PET). Ces bouteilles et autres récipients, couramment utilisés pour contenir des boissons gazeuses ou non gazeuses, ou d'autres liquides ou des poudres, sont extrêmement résistants pour des épaisseurs de parois relativement faibles. Lorsqu'ils sont vides, ils sont difficiles à casser et leur aplatissement par pliage est malaisé, voire impossible. De ce fait, leur stockage dans les poubelles ou conteneurs de déchets nécessite une place importante, ce qui constitue un inconvénient énorme et représente un coût élevé pour leur élimination.

On a déjà proposé des récipients en matière thermoplastique destinés à l'emballage de liquides, de solides ou de poudres à la pression atmosphérique qui sont munis de lignes de pliage indiquées par une déformation de leur paroi formant un bourrelet en creux parfois juxtaposés à deux bourrelets en relief sans modification de l'épaisseur de la paroi. D'autres récipients présentent un amincissement de l'épaisseur de leur paroi le long de lignes de pliage (rainures) pour privilégier le pliage le long de ces lignes.

En particulier, la publication européenne EP-A-0 472 504 décrit un récipient pliant qui comporte des lignes de pliage faites au moulage sous la forme de gorges d'épaisseur réduite qui ont pour effet d'affaiblir localement le récipient. Ce procédé ne permet pas de modifier la structure de la matière, mais aboutit à un affaiblissement particulièrement important de la résistance des parois du récipient.

Ces emballages connus, généralement réalisés avec des polyoléfines telles que le polyéthylène et le polypropylène, présentent plusieurs inconvénients et limitations dans leur utilisation. En premier lieu, les récipients présentant des rainures ont une résistance mécanique affaiblie pour une masse de matière donnée de l'ensemble du récipient. En second lieu, les récipients munis de bourrelets sans diminution locale de l'épaisseur de la paroi le long des lignes de pliage sont malaisés à plier selon les lignes prévues. En troisième lieu, les deux types de récipients ci-dessus ne se prêtent pas à un pliage net par fracture partielle de la paroi le long des lignes de pliage en raison de la haute plasticité de leur matière, et de la "mémoire de déformation" des matières thermoplastiques dans cet état à forte plasticité qui amène la paroi pliée à se déplier spontanément. En quatrième lieu, les récipients décrits ci-dessus ne peuvent pas être réalisés dans des matières thermoplastiques susceptibles d'être amenées à un état de haute résistance mécanique qui est nécessaire notamment pour l'emballage de fluides sous pression super-atmosphérique, tels que par exemple les boissons carbonatées. En effet, des récipients réalisés dans de tels matériaux, le PET par exemple, se prêtent encore moins que les précédents au pliage par fracture en raison de leur module d'élasticité élevé combiné avec une certaine déformabilité plastique.

La présente invention permet d'éliminer les inconvénients et limitations d'emploi des récipients connus munis de lignes de pliage énumérés ci-dessus et présente en outre les avantages de suppression de toute altération géométrique de la paroi (bourrelets et/ou rainures) le long des lignes de pliage, tout en améliorant la visibilité de ces lignes de pliage et en assurant un pliage net, irréversible, bien circonscrit aux lignes de pliage et aisé des récipients, sans limitation de leur résistance avant leur pliage.

Dans ce but, le récipient selon l'invention est caractérisé en ce que, dans ladite zone linéaire étroite, ladite matière synthétique a une structure physique différente de celle qu'elle a dans le reste de la paroi.

Dans ladite zone, ladite matière synthétique a, de préférence, une structure physique qui la rend moins déformable plastiquement que dans le reste de la paroi, mais au moins aussi résistante à la traction.

Selon une forme de réalisation avantageuse, ladite matière synthétique a une structure physique comprise entre une structure amorphe et une structure cristallisée. De préférence, ladite matière synthétique a une structure plus cristallisée dans ladite zone que dans le reste de la paroi.

D'une façon avantageuse, ladite matière synthétique est transparente dans ledit reste de la paroi, et opaque dans la zone plus cristallisée.

De préférence, l'épaisseur moyenne de ladite zone est inférieure à l'épaisseur du reste de la paroi hors de cette zone dans un rapport compris entre 1 et le rapport des tensions mécaniques de résistance à la traction de ladite zone et du reste de la paroi.

Dans une forme de réalisation particulièrement avantageuse ladite matière synthétique est du téréphtalate de polyéthylène (PET) et est durcissable par réticulation des chaînes de polymères qui la constituent.

Selon une première forme de réalisation, la ligne de pliage est longitudinale et au moins partiellement disposée selon un plan médian dudit récipient. Elle peut également être transversale.

Selon une autre forme de réalisation, la ligne de pliage longitudinale se subdivise en au moins deux segments obliques à proximité du fond et/ou de l'ouverture dudit récipient.

Afin d'atteindre le but recherché, le procédé selon l'invention est caractérisé en ce que, après avoir formé au moins partiellement le récipient, on modifie la structure physique de ladite matière dans une zone linéaire étroite de la paroi du récipient constituant ladite ligne de pliage.

De préférence, l'on modifie la structure physique de ladite matière par une action mécanique localisée dans ladite zone.

On peut également modifier la structure physique de ladite matière par une action thermique localisée dans ladite zone ou par l'action d'une irradiation de particules ou de photons ou d'un agent chimique, localisée dans ladite zone.

L'on peut durcir ladite matière par étirage lorsque, après avoir formé au moins partiellement le récipient par étirage-soufflage d'une ébauche, l'on durcit la matière de ladite zone en provoquant un étirage supplémentaire de la paroi du récipient localisé dans cette zone constituant la ligne de pliage, transversalement par rapport à cette ligne.

De préférence, l'on provoque ledit étirage supplémentaire à une température inférieure à celle à laquelle est effectué ledit étirage-soufflage.

L'on peut également durcir ladite matière synthétique par une cristallisation provoquée par son échauffement lorsque, après avoir effectué au moins partiellement le formage du récipient à une température, en portant temporairement la paroi, dans une zone circonscrite à ladite zone, à une température supérieure à celle à laquelle est effectué ledit formage.

L'on peut aussi durcir la matière synthétique par réticulation des chaînes de polymères qui la constituent lorsque, après avoir formé au moins partiellement le récipient, l'on soumet une zone de la paroi de ce récipient circonscrite à ladite zone à une irradiation de particules, de photons ou d'un agent chimique susceptible de provoquer ladite réticulation.

Dans une forme avantageuse du procédé, l'on porte la paroi du récipient à une température permettant sa déformation plastique, l'on maintient ladite paroi fermement appliquée sur la surface de la cavité d'un moule constitué d'au moins deux parties jointes le long d'une ligne correspondant à ladite ligne de pliage au moyen d'un fluide maintenu à une pression superatmosphérique, l'on provoque un écartement prédéterminé des deux parties du moule pour provoquer ledit étirage supplémentaire localisé dans la zone de la ligne de pliage, l'on abaisse la pression dudit fluide à la pression atmosphérique, et l'on ouvre les deux parties du moule pour en extraire le récipient.

Dans cette forme de réalisation du procédé, ladite température permettant la déformation plastique du récipient est comprise entre 95 et 110°C, ladite pression superatmosphérique est comprise entre 10 et 60 bars et de préférence entre 35 et 45 bars, et ledit écartement prédéterminé est compris entre 0,5 et 5 mm et de préférence entre 1 et 2 mm.

De façon avantageuse l'on maintient temporairement la paroi du récipient fermement appliquée au moyen dudit fluide sous pression superatmosphérique contre la surface de la cavité dudit moule avant et/ou après ledit écartement prédéterminé, et ce pendant une durée comprise entre 0,1 et 0,35 s avant l'écartement et entre 0,1 et 2 s après cet écartement.

Dans une forme de réalisation du procédé, pour réaliser ledit récipient avec ladite ligne de pliage, l'on effectue de manière simultanée le soufflage et l'étirage à partir d'une ébauche portée à la température de déformation au moyen dudit fluide maintenu à une pression superatmosphérique dans ledit moule, ce dernier étant maintenu à une température inférieure à ladite température de déformation du récipient. La température dudit moule est comprise entre 0 et 20°C et de préférence entre 4 et 8°C.

L'on peut également effectuer de manière simultanée ledit étirage supplémentaire et une thermofixation de l'ensemble du récipient au moyen dudit fluide maintenu à une pression superatmosphérique dans ledit moule, ce dernier étant maintenu à une température supérieure à ladite température du récipient et comprise entre 110 et 120°C et de préférence entre 140 et 180°C.

Dans une autre forme de réalisation du procédé de l'invention, l'on peut balayer ladite zone linéaire étroite au moyen d'un faisceau concentré de radiations électromagnétiques produites par une source laser dans un domaine de longueurs d'onde situées dans l'UV ou dans l'IR où la distance d'extinction de la radiation dans la matière synthétique dont est constitué le récipient est inférieure à quatre fois l'épaisseur de la paroi dudit récipient et de préférence comprise entre 0,002 et 1 fois l'épaisseur de la paroi de ce récipient.

L'on peut également modifier la structure physique de ladite matière synthétique dans ladite zone par un échauffement local obtenu en balayant cette zone au moyen d'un faisceau concentré de radiations IR, de longueur d'onde comprise entre 1,2 et 12»m, émis par une source laser, et en ajustant la puissance et la vitesse de balayage du faisceau pour amener la température de la paroi dans ladite zone linéaire étroite dans un domaine de températures où le degré de cristallisation de ladite matière est augmenté, la longueur d'onde du faisceau concentré de radiations IR étant de préférence comprise entre 10 à 12 »m et particulièrement comprise entre 1,6 et 1,7 »m.

La présente invention sera mieux comprise en référence à la description d'un exemple de réalisation et du dessin annexé dans lequel :
la figure 1 représente une vue en élévation d'un récipient selon l'invention pourvu d'une ligne longitudinale de pliage,
la figure 2 représente une vue en perspective de ce récipient lorsqu'il est plié selon ladite ligne de pliage,
la figure 3 représente une autre forme de réalisation d'un récipient selon l'invention pourvu de lignes transversales de pliage,
la figure 4 représente une autre forme de réalisation d'un récipient pourvu d'une ligne longitudinale de pliage qui se subdivise à proximité du fond et à hauteur de l'ouverture,
la figure 5 illustre une phase initiale du procédé de fabrication du récipient selon l'invention, et
la figure 6 illustre une phase finale du processus de soufflage qui s'inscrit dans le procédé de fabrication du récipient selon l'invention.

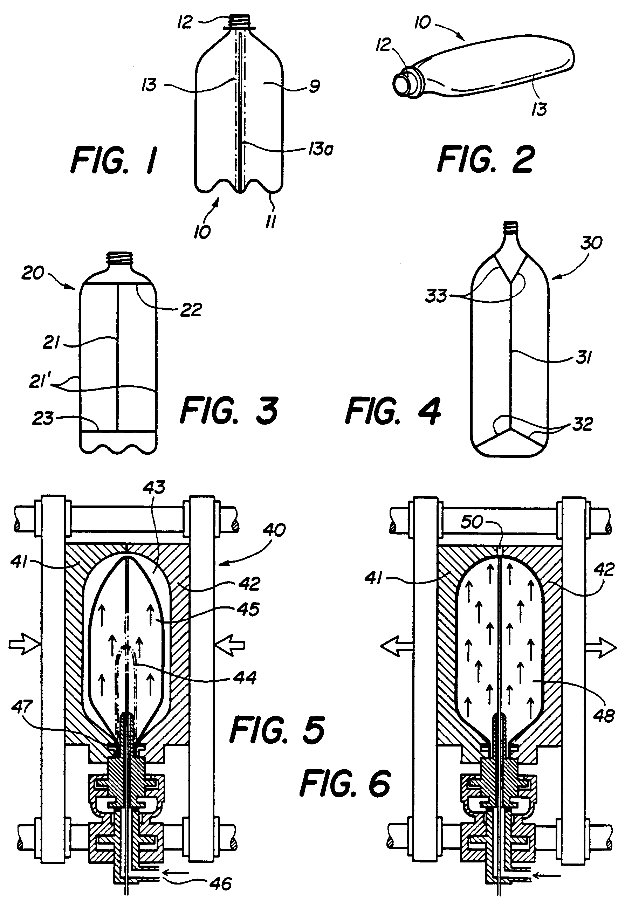

En référence à la figure 1, le récipient 10, qui se présente sous la forme d'une bouteille en matière thermoplastique, comporte un fond 11 et une ouverture 12 opposée à ce fond et, sur sa paroi 9, une ligne de pliage 13 disposée sur un plan médian ou axial. Cette ligne de pliage 13 est obtenue par modification de la structure physique de la matière dans laquelle est formée cette bouteille, par exemple mécaniquement comme cela sera décrit plus en détail en référence aux figures 5 et 6.

Selon la forme du récipient, en particulier selon la taille relative de ladite ouverture, celui-ci est produit par thermoformage d'une ébauche plate, ou par soufflage ou étirage-soufflage d'une ébauche creuse. Afin de conférer au récipient une résistance mécanique élevée avec une masse de matière réduite, le récipient est avantageusement réalisé en une matière thermoplastique telle que le PET susceptible d'avoir une structure physique comprise entre une structure amorphe et une structure cristallisée. Une structure intermédiaire à haute résistance mécanique, mais conservant la transparence de la matière, peut être obtenue en soumettant cette matière à une élongation bi-axiale importante au cours du formage du récipient réalisé par exemple par étirage-soufflage d'une préforme, et/ou en soumettant ladite matière à une thermofixation après ce formage qui accroît son degré de cristallisation.

La structure physique de la matière est modifiée uniquement dans la zone étroite 13a (représentée agrandie sur la fig. 1) de la paroi 9 de la bouteille où la ligne de pliage 13 doit se trouver. Cette modification de structure, qui consiste dans cet exemple à transformer ladite structure intermédiaire et transparente de la matière utilisée en une structure cristallisée et opaque, peut être obtenue par une action mécanique ou thermique, ou par une irradiation de la zone 13a, par exemple au moyen d'un faisceau laser. Par modification de la structure physique on entend également une modification purement thermique ou une modification physico-chimique telle que par exemple une transformation des liaisons de réticulation de chaînes de polymères.

Lorsque l'on a recours à une action mécanique, l'on provoque, après ou au cours de l'opération d'étirage-soufflage de l'ébauche de la bouteille, un étirage supplémentaire de faible amplitude de la zone 13a perpendiculairement à la ligne de pliage, à une température avantageusement inférieure à la température à laquelle est effectué l'étirage-soufflage.

Lorsque l'on a recours à une action thermique, après le formage du récipient, l'on durcit la matière synthétique par une cristallisation en portant la zone 13a à une température supérieure à celle à laquelle est effectué ce formage. Ce résultat est obtenu par exemple en disposant temporairement un filament échauffé par un courant électrique à proximité immédiate de la paroi du récipient le long de la ligne de pliage.

Une irradiation de particules, de photons ou d'agents chimiques appropriés dans la zone 13a permet également d'effectuer un durcissement de la matière dans cette zone par réticulation des chaînes de polymère la constituant.

Ces transformations de structure de la matière dans la zone 13a rendent cette zone plus dure et fragile que le reste de la paroi 9, mais au moins aussi résistante à la traction avant son pliage. Ainsi la résistance mécanique de la paroi n'est pas amoindrie dans la zone 13a malgré son épaisseur moindre. Des mesures de résistance ont démontré cette propriété. Dans la pratique, la diminution de l'épaisseur est inférieure à 10%.

De ce fait, l'intégrité de la résistance aux chocs du récipient ainsi que celle de sa résistance à la pression du fluide qu'il peut contenir est garantie. Cependant, les tensions mécaniques de traction et de compression provoquées par la flexion de la paroi lors de son pliage sont intensifiées dans la zone de pliage 13a par un facteur égal au cube du rapport des épaisseurs de la paroi 9 hors de cette zone et dans cette zone. Ainsi, lors du pliage de la paroi, celle-ci se fracture de manière nette et concentrée dans la zone de pliage plus dure et plus fragile que le reste de la paroi.

Grâce à cette ligne de pliage durcie et fragilisée, cette bouteille peut être aplatie aisément (fig. 2) lorsqu'elle est vide, ce qui permet de la stocker dans une poubelle ou dans un conteneur de déchets de manière à ce qu'elle occupe un volume relativement réduit. On notera que les bouteilles actuelles en PET sont particulièrement difficiles à plier en l'absence d'une telle ligne de pliage. En effet, il est très difficile de plier les parois d'un récipient réalisé dans ces matériaux qui ont en outre une sorte de mémoire de forme et tendent à reprendre leur forme initiale après avoir été pliés.

Comme le montrent les figures 3 et 4, les lignes de pliage peuvent avoir des formes très différentes en fonction notamment de la forme des récipients. Dans le cas du récipient 20 représenté par la figure 3, on prévoit une ligne longitudinale de pliage 21 disposée de chaque côté de la bouteille sur un plan médian ou axial. On peur également prévoir deux autres lignes longitudinales de pliage 21' qui sont disposées sur un plan médian perpendiculaire à celui passant par les lignes de pliage 21. Par ailleurs une première ligne transversale de pliage 22 est ménagée à proximité du fond de la bouteille et une deuxième ligne transversale de pliage 23 est ménagée à proximité de l'ouverture de cette bouteille.

Dans le cas de la bouteille 30 représentée par la figure 4, une ligne longitudinale de pliage 31 est prévue de part et d'autre de la bouteille. Chacune de ces lignes de pliage se subdivise en deux lignes obliques 32 disposées à proximité du fond de la bouteille et en deux autres lignes obliques 33 disposées à proximité de l'ouverture. On notera que sur une même bouteille, on peut prévoir toutes les combinaisons possibles en réalisant par exemple une ou plusieurs lignes longitudinales de pliage 31 combinées soit avec deux ou plusieurs lignes obliques 32, soit avec deux ou plusieurs lignes obliques 33.

Les figures 5 et 6 illustrent schématiquement à titre d'exemple une forme particulière du procédé de fabrication des récipients selon l'invention décrits ci-dessus. Ce type de récipient est couramment réalisé par étirage-soufflage d'une ébauche constituée initialement par une préforme préalablement moulée par injection ou par compression. Lors d'une première phase cette préforme est portée à une température comprise dans une plage conférant à la matière qui la constitue un comportement rhéologique favorable à son renforcement mécanique par réorientation de ses chaînes moléculaires de polymère (cristallisation partielle microscopique). L'on procède ensuite à l'élongation bi-axiale de cette préforme par étirage-soufflage. Dans ce but, ces préformes sont introduites dans un moule 40 composé d'au moins deux coquilles 41 et 42 définissant une cavité de moulage 43 dont la forme est celle du récipient à fabriquer. La figure 5 représente en traits interrompus une préforme 44 qui est gonflée au cours du processus d'étirage-soufflage. La préforme passe par un stade intermédiaire 45 représenté en traits pleins, sous l'effet de l'air comprimé injecté, représenté par les deux flèches 46, à travers une buse d'injection 47 sur laquelle est montée la préforme. L'on maintient ou l'on accroît la pression de soufflage du récipient de manière à le maintenir fermement appliqué sur la surface de la cavité 43.

Dans la phase finale du processus d'étirage-soufflage, représentée par la figure 6, lorsque le récipient a atteint au moins partiellement ses dimensions finales 48, pour créer la ligne de pliage, on procède à une légère ouverture du moule, c'est-à-dire que l'on écarte les coquilles 41 et 42 de manière à créer un espace 50 entre les bords de ces coquilles. Comme une pression relativement importante règne à l'intérieur du récipient soufflé, cette ouverture a pour effet de provoquer un étirage supplémentaire de la paroi du récipient le long de la ligne d'ouverture de la cavité à la jonction des deux coquilles 41 et 42, perpendiculairement à cette ligne, ce qui aboutit à la cristallisation de la matière sur une zone étroite dont la largeur, qui correspond audit espace 50, peut être comprise entre quelques dixièmes de millimètres et quelques millimètres, et ainsi de créer ladite ligne de pliage. Cet étirage supplémentaire s'effectue à une température voisine de la température de la surface du moule, qui est inférieure à la température de la préforme durant son étirage-soufflage.

Pour renforcer la résistance mécanique du récipient, on peut effectuer de façon simultanée ledit étirage supplémentaire et une thermofixation à une température relativement élevée, soit environ 100°C. Cette température est en fait celle à laquelle on procède au nettoyage des bouteilles récupérables et à la pasteurisation des boissons. La thermofixation se fait par une élévation temporaire de la température du récipient après son étirage-soufflage dans un premier moule, de manière à développer sa cristallisation sans la rendre opaque, c'est-à-dire à un degré de cristallisation inférieur à celui provoqué lors de la phase d'étirage supplémentaire dans la zone de pliage.

Il est bien entendu que dans l'exemple décrit, la ligne de pliage est une ligne longitudinale de pliage disposée sur un plan médian du récipient réalisé. Pour réaliser des lignes de pliage disposées selon plusieurs plans, il suffit de réaliser un moule composé de plusieurs coquilles susceptibles d'être écartées deux à deux pendant la phase terminale du processus de soufflage.

En outre, on notera que le procédé peut s'appliquer non seulement à des bouteilles, mais à d'autres types d'emballages tels que par exemple des boîtes destinées à contenir des substances solides comme des poudres, des granulés, des tubes contenant des matières pâteuses, alimentaires, cosmétiques, des pâtes dentifrice, des pâtes à usage technique comme les graisses, les agents de nettoyage etc.. En effet, de nombreux produits entrant dans ces catégories sont conditionnés dans des tubes métalliques ou dans des tubes en matière synthétique qui présentent l'inconvénient de se plier difficilement et ont tendance à reprendre leur forme initiale. L'application du procédé ci-dessus pour créer une ligne de pliage sur l'emballage permet de résoudre ce problème. De ce fait, ce type d'emballage en matière synthétique peut être généralisé et remplacer progressivement les tubes métalliques ou synthétiques traditionnels.

## Revendications

1. Récipient en matière synthétique comportant un fond fermé et une ouverture ménagée dans la partie supérieure opposée audit fond, et plus particulièrement un récipient en matière thermoplastique réalisé selon un procédé de soufflage, d'étirage-soufflage ou de thermoformage, sa paroi (9) comportant au moins une ligne de pliage (13) constituée par une zone linéaire étroite (13a) de la paroi, caractérisé en ce que, dans ladite zone linéaire étroite (13a), ladite matière synthétique a une structure physique différente de celle qu'elle a dans le reste de la paroi (9).

2. Récipient selon la revendication 1, caractérisé en ce que, dans ladite zone (13a), ladite matière synthétique a une structure physique qui la rend moins déformable plastiquement que dans le reste de la paroi (9), mais au moins aussi résistante à la traction.

3. Récipient selon la revendication 1, caractérisé en ce que ladite matière synthétique a une structure physique comprise entre une structure amorphe et une structure cristallisée.

4. Récipient selon la revendication 3, caractérisé en ce que la matière synthétique a une structure plus cristallisée dans la zone (13a) que dans le reste de la paroi (9).

5. Récipient selon la revendication 4, caractérisé en ce que ladite matière synthétique est transparente dans la paroi (9), et opaque dans la zone (13a) plus cristallisée.

6. Récipient selon la revendication 2, caractérisé en ce que l'épaisseur moyenne de la zone (13a) est inférieure à l'épaisseur de la paroi (9) hors de cette zone dans un rapport compris entre 1 et le rapport des tensions mécaniques de résistance à la traction de ladite zone et du reste de la paroi.

7. Récipient selon la revendication 3, caractérisé en ce que ladite matière synthétique est constituée par du téréphtalate de polyéthylène (PET).

8. Récipient selon la revendication 2, caractérisé en ce que ladite matière synthétique est durcissable par réticulation des chaînes de polymères qui la constituent.

9. Récipient selon la revendication 1, caractérisé en ce que la ligne de pliage (13) est longitudinale et au moins partiellement disposée selon un plan médian dudit récipient (10).

10. Récipient selon la revendication 1, caractérisé en ce que la ligne de pliage est transversale.

11. Récipient selon la revendication 9, caractérisé en ce que la ligne de pliage longitudinale (31) se subdivise en au moins deux segments (32, 33) obliques à proximité du fond (11) et/ou de l'ouverture (12) dudit récipient.

12. Procédé de fabrication d'un récipient en matière synthétique comportant un fond fermé et une ouverture ménagée dans la partie supérieure opposée audit fond, et plus particulièrement un récipient en matière thermoplastique réalisé par un procédé de soufflage, d'étirage-soufflage ou de thermo-formage, ce récipient comportant au moins une ligne de pliage, caractérisé en ce que, après avoir formé au moins partiellement le récipient, on modifie la structure physique de ladite matière dans une zone linéaire étroite de la paroi du récipient constituant ladite ligne de pliage.

13. Procédé selon la revendication 12, caractérisé en ce que l'on modifie la structure physique de ladite matière par une action mécanique localisée dans ladite zone.

14. Procédé selon la revendication 12, caractérisé en ce que l'on modifie la structure physique de ladite matière par une action thermique localisée dans ladite zone.

15. Procédé selon la revendication 12, caractérisé en ce que l'on modifie la structure physique de ladite matière par l'action d'une irradiation de particules ou de photons ou d'un agent chimique localisée dans ladite zone.

16. Procédé selon la revendication 13, caractérisé en ce que l'on durcit ladite matière par étirage et en ce que, après avoir formé au moins partiellement le récipient par étirage-soufflage d'une ébauche, l'on durcit la matière de ladite zone en provoquant un étirage supplémentaire de la paroi du récipient localisé dans cette zone constituant la ligne de pliage, transversalement par rapport à cette ligne.

17. Procédé selon la revendication 16, caractérisé en ce que l'on provoque ledit étirage supplémentaire à une température inférieure à celle à laquelle est effectué ledit étirage-soufflage.

18. Procédé selon la revendication 14, caractérisé en ce que, après avoir effectué au moins partiellement le formage du récipient, l'on durcit ladite matière synthétique par une cristallisation, en portant temporairement la paroi, dans une zone circonscrite à ladite zone, à une température supérieure à celle à laquelle est effectué ledit formage.

19. Procédé selon la revendication 15, caractérisé en ce que, après avoir formé au moins partiellement le récipient, l'on durcit la matière synthétique par réticulation des chaînes de polymères qui la constituent en soumettant une zone de la paroi de ce récipient circonscrite à ladite zone à une irradiation de particules, de photons ou d'un agent chimique susceptible de provoquer ladite réticulation.

20. Procédé selon la revendication 16, caractérisé en ce que l'on porte la paroi du récipient à une température permettant sa déformation plastique, en ce qu'on maintient ladite paroi fermement appliquée sur la surface de la cavité d'un moule constitué d'au moins deux parties jointes le long d'une ligne correspondant à ladite ligne de pliage au moyen d'un fluide maintenu à une pression superatmosphérique, en ce que l'on provoque un écartement prédéterminé des deux parties du moule pour provoquer ledit étirage supplémentaire localisé dans la zone de la ligne de pliage, en ce que l'on abaisse la pression dudit fluide à la pression atmosphérique, et en ce que l'on ouvre les deux parties du moule pour en extraire le récipient.

21. Procédé selon la revendication 20, caractérisé en ce que ladite température permettant la déformation plastique du récipient est comprise entre 95 et 110°C.

22. Procédé selon la revendication 20, caractérisé en ce que ladite pression superatmosphérique est comprise entre 10 et 60 bars et de préférence entre 35 et 45 bars.

23. Procédé selon la revendication 20, caractérisé en ce que ledit écartement prédéterminé est compris entre 0,5 et 5 mm et de préférence entre 1 et 2 mm.

24. Procédé selon la revendication 20, caractérisé en ce que l'on maintient temporairement la paroi du récipient fermement appliquée au moyen dudit fluide sous pression superatmosphérique contre la surface de la cavité dudit moule avant et/ou après ledit écartement prédéterminé.

25. Procédé selon la revendication 24, caractérisé en ce que l'on maintient la paroi du récipient fermement appliquée contre la surface de la cavité du moule pendant une durée comprise entre 0,1 et 0,35 s avant l'écartement et entre 0,1 et 2 s après cet écartement.

26. Procédé selon la revendication 20, caractérisé en ce que, pour réaliser ledit récipient avec ladite ligne de pliage, l'on effectue de manière simultanée le soufflage et l'étirage à partir d'une ébauche portée à ladite température au moyen dudit fluide maintenu à une pression superatmosphérique dans ledit moule, ce dernier étant maintenu à une température inférieure à ladite température du récipient.

27. Procédé selon la revendication 26, caractérisé en ce que la température dudit moule est comprise entre 0 et 20°C et de préférence entre 4 et 8°C.

28. Procédé selon la revendication 20, caractérisé en ce que l'on effectue de manière simultanée ledit étirage supplémentaire et une thermofixation de l'ensemble du récipient au moyen dudit fluide maintenu à une pression superatmosphérique, dans ledit moule, ce dernier étant maintenu à une température supérieure à ladite température du récipient.

29. Procédé selon la revendication 28, caractérisé en ce que la température dudit moule est comprise entre 110 et 120°C et de préférence entre 140 et 180°C.

30. Procédé selon la revendication 12, caractérisé en ce que l'on balaie ladite zone linéaire étroite au moyen d'un faisceau concentré de radiations électromagnétiques produites par une source laser dans un domaine de longueurs d'onde situées dans l'UV ou dans l'IR où la distance d'extinction de la radiation dans la matière synthétique dont est constitué le récipient est inférieure à quatre fois l'épaisseur de la paroi dudit récipient.

31. Procédé selon la revendication 30, caractérisé en ce que ladite distance d'extinction de la radiation est de préférence comprise entre 0,002 et 1 fois l'épaisseur de la paroi du récipient.

32. Procédé selon la revendication 30, caractérisé en ce que l'on modifie la structure physique de ladite matière synthétique dans ladite zone par un échauffement local obtenu en balayant cette zone au moyen d'un faisceau concentré de radiations IR, de longueur d'onde comprise entre 1,2 et 12»m, émis par une source laser, et en ce que l'on ajuste la puissance et la vitesse de balayage du faisceau pour amener la température de la paroi dans ladite zone linéaire étroite dans un domaine de températures où le degré de cristallisation de ladite matière est augmenté.

33. Procédé selon la revendication 32, caractérisé en ce que la longueur d'onde du faisceau concentré de radiations IR est de préférence comprise entre 10 à 12 »m.

34. Procédé selon la revendication 32, caractérisé en ce que la longueur d'onde du faisceau de radiations IR est de préférence comprise entre 1,6 et 1,7 »m.

## Claims

1. Container made of a synthetic material comprising a closed bottom wall and an opening in the upper portion opposite said bottom wall, and more specifically a thermoplastic container made according to a blow molding, stretch blow molding or thermoforming method, its wall (9) comprising at least one fold line (13) consisting of a narrow linear zone (13a) in the wall, characterized in that in said narrow linear zone (13a) said synthetic material has a different physical structure from that in the rest of the wall (9).

2. Container according to claim 1 characterized in that in said zone (13a) said synthetic material has a physical structure which makes it less plastically deformable than the rest of the wall (9), but it maintains at least the same tensile strength.

3. Container according to claim 1 characterized in that said synthetic material has a physical structure ranging from an amorphous structure to a crystalline structure.

4. Container according to claim 3 characterized in that said synthetic material has a more crystalline structure in zone (13a) than in the rest of the wall (9).

5. Container according to claim 4 characterized in that said synthetic material is transparent in the wall (9) and opaque in the more crystalline zone (13a).

6. Container according to claim 2 characterized in that the average thickness of the zone (13a) is less than the thickness of the wall (9) outside said zone at a ratio ranging from 1 to the ratio of the tensile strength of said wall to that of the rest of the bottle.

7. Container according to claim 3 characterized in that said synthetic material consists of polyethylene terephtalate (PET).

8. Container according to claim 2 characterized in that said synthetic material can be hardened by reticulation of the polymer chains which comprise the material.

9. Container according to claim 1 characterized in that the fold line (13) is longitudinal and at least partially disposed along a median plane of said container (10).

10. Container according to claim 1 characterized in that the fold line is transverse.

11. Container according to claim 9 characterized in that the longitudinal fold line (31) is subdivided into at least two oblique segments (32, 33) near the base wall (11) and/or the container opening (12).

12. Method for making a container of synthetic material comprising a closed bottom wall and an opening in the upper portion opposite said bottom wall, and more specifically, a thermoplastic container made by blow molding, stretch blow molding or thermoforming, said container having at least one fold line, characterized in that after the container has been at least partially formed, the physical structure of said material in said narrow linear zone in the container wall is modified to form the fold line.

13. Method according to claim 12 characterized in that the physical structure of said material is modified by localized mechanical action in said zone.

14. Method according to claim 12 characterized in that the physical structure of said material is modified by localized thermal action in said zone.

15. Method according to claim 12 characterized in that the physical structure of said material is modified by the localized irradiation of said zone with particles, photons or a chemical agent.

16. Method according to claim 13 characterized in that said material is hardened by stretching it, and in that after the container is at least partially formed by stretch blow molding a preform, the material in said zone is hardened by local supplemental stretching of the container wall in said zone which constitutes the fold line, transversely in relation to said line.

17. Method according to claim 16 characterized in that said supplemental stretching takes place at a lower temperature than the temperature for stretch blow molding.

18. Method according to claim 14 characterized in that after the container is at least partially formed, the synthetic material in said zone is hardened by a crystallization process, wherein the temperature of the wall in the area limited to said zone is temporarily raised to a higher temperature than the temperature at which formation occurs.

19. Method according to claim 15 characterized in that after the container is at least partially formed, the synthetic material is hardened by reticulation of the polymer chains which comprise the material, whereby one zone of the container wall limited to said zone is subjected to irradiation by particles, photons or a chemical agent capable of causing said reticulation.

20. Method according to claim 16 characterized in that the temperature of the container wall is raised to a temperature allowing plastic deformation, and in that said wall is maintained firmly in contact with the surface of a mold cavity consisting of at least two portions joined along a line corresponding to said fold line by means of fluid maintained at superatmospheric pressure, in that the two mold portions are separated for a predetermined distance resulting in localized supplemental stretching in the area of the fold line, and in that the pressure of said fluid is then lowered to atmospheric pressure, in that the two portions of the mold are then opened and the container removed.

21. Method according to claim 20 characterized in that said temperature allowing plastic deformation of the container ranges from 95 to 110° C.

22. Method according to claim 20 characterized in that said superatmospheric pressure ranges from 10 to 60 bars and preferably from 35 to 45 bars.

23. Method according to claim 20 characterized in that said predetermined separation distance ranges from 0.5 to 5 mm and preferably from 1 to 2 mm.

24. Method according to claim 20 characterized in that the container wall is temporarily maintained firmly against the surface of said mold cavity by means of said fluid at superatmospheric pressure, before and/or after separating the mold portions by a predetermined distance.

25. Method according to claim 24 characterized in that the container wall is temporarily maintained firmly against the surface of said mold cavity for a duration ranging from 0.1 to 0.35 s before separation and from 0.1 to 2 s after said separation.

26. Method according to claim 20 characterized in that to manufacture said container with said fold line, blow molding and stretching are performed simultaneously by raising the preform temperature using said fluid maintained at superatmospheric pressure within the mold, the latter being maintained at a lower temperature than the temperature of the container.

27. Method according to claim 26 characterized in that the temperature of said mold ranges from 0 to 20°C and preferably from 4 to 8°C.

28. Method according to claim 20 characterized in that said supplemental stretching and thermofixation of the entire bottle are performed simultaneously using said fluid maintained at superatmospheric pressure within said mold, the latter being maintained at a temperature higher than the container temperature.

29. Method according to claim 28 characterized in that the temperature of said mold ranges from 110 to 120°C and preferably from 140 to 180°C.

30. Method according to claim 12 characterized in that said narrow linear zone is swept with a beam of concentrated electromagnetic radiation having a wave length range of from UV to UR emitted by a laser source, wherein the radiation extinction distance in the synthetic material comprising the container is less than four times the thickness of the container wall.

31. Method according to claim 30 characterized in that said radiation extinction distance preferably ranges from 0.002 to 1 times the thickness of the container wall.

32. Method according to claim 30 characterized in that the physical structure of said synthetic material is modified in said zone by local heating which results from sweeping said zone with a beam of concentrated radiation 1R with a wave length of from 1.2 to 12 »m, emitted by a laser source, and in that the power and speed of the beam are adjusted to raise the temperature of the wall in said zone to a temperature range which increases the degree of crystallization.

33. Method according to claim 32 characterized in that the wave length of the concentrated radiation beam 1R is preferably from 10 to 12 »m.

34. Method according to claim 32 characterized in that the wave length of the radiation beam 1R is preferably from 1.6 to 1.7 »m.

## Patentansprüche

1. Behälter aus Kunststoff, mit einem geschlossenen Boden und einer Öffnung, die in dem oberen, dem Boden entgegengesetzten, Teil angeordnet ist, insbesondere Behälter aus thermoplastischem Kunststoff, der nach einem Verfahren zum Blasformen, Streck-Blasformen oder Warmformen hergestellt ist, wobei dessen Wandung (9) mindestens eine Biegelinie (13), die durch einen engen linearen Bereich (13a) der Wandung gebildet ist, enthält,
**dadurch gekennzeichnet,** daß in dem engen linearen Bereich (13a) der Kunststoff eine unterschiedliche physikalische Struktur gegenüber der übrigen Wandung (9) aufweist.

2. Behälter nach Anspruch 1,
**dadurch gekennzeichnet,** daß in dem Bereich (13a) der Kunststoff eine physikalische Struktur aufweist, welche plastisch weniger verformbar als die Struktur des Kunststoffes der übrigen Wandung (9) ist, jedoch mindestens die gleiche Zugfestigkeit aufweist.

3. Behälter nach Anspruch 1,
**dadurch gekennzeichnet,** daß der Kunststoff eine physikalische Struktur besitzt, die zwischen einer amorphen Struktur und einer kristallinen Struktur liegt.

4. Behälter nach Anspruch 3,
**dadurch gekennzeichnet,** daß der Kunststoff eine Struktur mit einem höheren Kristallisationsgrad in dem Bereich (13a) als in der übrigen Wandung (9) aufweist.

5. Behälter nach Anspruch 4,
**dadurch gekennzeichnet,** daß der Kunststoff in der Wandung (9) durchsichtig und in dem Bereich (13a) mit einem höheren Kristallisationsgrad undurchsichtig ist.

6. Behälter nach Anspruch 2,
**dadurch gekennzeichnet,** daß die mittlere Stärke des Bereiches (13a) kleiner als die Stärke der Wandung (9) außerhalb dieses Bereiches ist, und zwar in einem Verhältnis zwischen 1 und dem Verhältnis der mechanischen Spannungen zur Zugfestigkeit des Bereiches und der übrigen Wandung.

7. Behälter nach Anspruch 3,
**dadurch gekennzeichnet,** daß der Kunststoff aus Polyethylen-Terephtalat (PET) besteht.

8. Behälter nach Anspruch 2,
**dadurch gekennzeichnet,** daß der Kunststoff durch Vernetzung der Polymerketten, aus denen er besteht, härtbar ist.

9. Behälter nach Anspruch 1,
**dadurch gekennzeichnet,** daß die Biegelinie (13) in Längsrichtung verläuft und mindestens teilweise in einer mittleren Ebene des Behälters (10) angeordnet ist.

10. Behälter nach Anspruch 1,
**dadurch gekennzeichnet,** daß die Biegelinie in Querrichtung verläuft.

11. Behälter nach Anspruch 9,
**dadurch gekennzeichnet,** daß die in Längsrichtung verlaufende Biegelinie (31) in der Nähe des Bodens (11) und/oder der Öffnung (12) des Behälters in mindestens zwei schräg verlaufende Segmente (32,33) unterteilt ist.

12. Verfahren zur Herstellung eines Behälters aus Kunststoff mit einem geschlossenen Boden und einer Öffnung, die im oberen Teil dem Boden entgegengesetzt angeordnet ist, insbesondere eines Behälters aus thermoplastischem Kunststoff, der nach einem Verfahren zum Blasformen, Streck-Blasformen oder Warmformen hergestellt ist, wobei der Behälter mindestens eine Biegelinie enthält,
**dadurch gekennzeichnet,** daß nach einem mindestens Teilformen des Behälters die physikalische Struktur des Kunststoffes in einem engen linearen Bereich der Wandung des Behälters, der die Biegelinie enthält, abgeändert wird.

13. Verfahren nach Anspruch 12,
**dadurch gekennzeichnet,** daß die physikalische Struktur des Kunststoffes durch eine lokale mechanische Einwirkung in dem Bereich abgeändert wird.

14. Verfahren nach Anspruch 12,
**dadurch gekennzeichnet,** daß die physikalische Struktur des Kunststoffes durch eine lokale thermische Einwirkung in dem Bereich abgeändert wird.

15. Verfahren nach Anspruch 12,
**dadurch gekennzeichnet,** daß die physikalische Struktur des Kunststoffes durch die Einwirkung einer lokalen Bestrahlung mit Partikeln oder mit Photonen oder eines chemischen Stoffes in dem Bereich abgeändert wird.

16. Verfahren nach Anspruch 13,
**dadurch gekennzeichnet,** daß der Kunststoff durch Strecken gehärtet wird, und daß, nachdem der Behälter durch Streck-Blasformen eines Rohlings mindestens teilweise geformt wurde, der Kunststoff in dem Bereich gehärtet wird, in dem ein zusätzliches Strecken der Wandung des Behälters in dem Bereich, in dem die Biegelinie verläuft, in Querrichtung gegenüber dieser Biegelinie, lokal durchgeführt wird.

17. Verfahren nach Anspruch 16,
**dadurch gekennzeichnet,** daß das zusätzliche Strecken bei einer Temperatur durchgeführt wird, die unter der Temperatur bei der Durchführung des Streck-Blasformens liegt.

18. Verfahren nach Anspruch 14,
**dadurch gekennzeichnet,** daß nachdem der Behälter mindestens teilgeformt wurde, der Kunststoff durch eine Kristallisation gehärtet wird, indem die Wandung in einem eingeschränkten Teil des Bereiches zeitweilig auf eine Temperatur gebracht wird, die über der Temperatur bei der Durchführung des Formens liegt.

19. Verfahren nach Anspruch 15,
**dadurch gekennzeichnet,** daß nachdem der Behälter mindestens teilgeformt wurde, der Kunststoff durch Vernetzung der Polymerketten, aus denen er besteht, gehärtet wird, indem die Wandung in einem eingeschränkten Teil des Bereiches einer Bestrahlung von Partikeln, von Photonen oder eines chemischen Stoffes ausgesetzt wird, die die Vernetzung herbeiführen.

20. Verfahren nach Anspruch 16,
**dadurch gekennzeichnet,** daß die Wandung des Behälters auf eine Temperatur gebracht wird, bei der dessen plastische Verformung möglich ist, daß die Wandung auf die Oberfläche des Hohlraumes einer Form, die mindestens aus zwei aneinandergestoßenen Teilen entlang einer Linie entsprechend der Biegelinie besteht, mit Hilfe eines Mediums, das bei einem Druck gehalten wird, der über dem Atmosphärendruck liegt, fest angepreßt wird, wobei das Medium in eine vorher bestimmte Öffnung der beiden Formhälften eingeleitet wird, um das zusätzliche Strecken in dem Bereich der Biegelinie lokal durchzuführen, daß der Druck des Mediums auf den atmosphärischen Druck gesenkt wird, und daß die beiden Hälften der Form geöffnet werden, um den Behälter herauszunehmen.

21. Verfahren nach Anspruch 20,
**dadurch gekennzeichnet,** daß die Temperatur, die die plastische Verformung des Behälters ermöglicht, zwischen 95 und 110 °C liegt.

22. Verfahren nach Anspruch 20,
**dadurch gekennzeichnet,** daß der überatmosphärische Druck zwischen 10 und 60 bar und vorzugsweise zwischen 35 und 45 bar liegt.

23. Verfahren nach Anspruch 20,
**dadurch gekennzeichnet,** daß die vorherbestimmte Öffnung zwischen 0,5 und 5 mm und vorzugsweise zwischen 1 und 2 mm liegt.

24. Verfahren nach Anspruch 20,
**dadurch gekennzeichnet,** daß die Wandung des Behälters mit Hilfe des Mediums bei einem überatmosphärischen Druck gegen die Oberfläche des Hohlraumes der Form vor und/oder hinter der vorherbestimmten Öffnung zeitweilig fest angepreßt gehalten wird.

25. Verfahren nach Anspruch 24,
**dadurch gekennzeichnet,** daß die Wandung des Behälters gegen die Oberfläche des Hohlraumes der Form während einer Dauer zwischen 0,1 und 0,35 s vor der vorherbestimmten Öffnung und zwischen 0,1 und 2 s nach der vorherbestimmten Öffnung fest angepreßt gehalten wird.

26. Verfahren nach Anspruch 20,
**dadurch gekennzeichnet,** daß für die Ausführung des Behälters mit der Biegelinie der Blasvorgang und der Streckvorgang mit einem Rohling gleichzeitig durchgeführt werden, der auf die beschriebene Temperatur mit Hilfe des Mediums gebracht wird, das in der Form mit einem Druck über Atmosphärendruck vorliegt, wobei die Form auf einer Temperatur unter der Temperatur des Behälters gehalten wird.

27. Verfahren nach Anspruch 26,
**dadurch gekennzeichnet,** daß die Temperatur der Form zwischen 0 und 20 °C und vorzugsweise zwischen 4 und 8 °C liegt.

28. Verfahren nach Anspruch 20,
**dadurch gekennzeichnet,** daß der zusätzliche Streckvorgang und ein Thermofixieren des gesamten Behälters mit Hilfe des Mediums, das bei einem überatmosphärischen Druck gehalten wird, in der Form gleichzeitig durchgeführt wird, wobei die Form auf einer Temperatur über der Temperatur des Behälters gehalten wird.

29. Verfahren nach Anspruch 28,
**dadurch gekennzeichnet,** daß die Temperatur der Form zwischen 110 und 120 °C und vorzugsweise zwischen 140 und 180 °C liegt.

30. Verfahren nach Anspruch 12,
**dadurch gekennzeichnet,** daß der schmale lineare Bereich mit Hilfe eines konzentrierten Bündels von elektromagnetischen Strahlen bestrichen wird, die von einer Laser-Quelle in einem Bereich von Wellenlängen des UV-Spektrums oder des IR-Spektrums erzeugt werden, wobei die Extinktionsdistanz der Strahlen in dem Kunststoff, aus dem der Behälter besteht, kleiner als das Vierfache der Dicke der Wandung des Behälters ist.

31. Verfahren nach Anspruch 30,
**dadurch gekennzeichnet,** daß die Extinktionsdistanz der Strahlen vorzugsweise zwischen 0,002 und 1 bezogen auf die Dicke der Wandung des Behälters beträgt.

32. Verfahren nach Anspruch 30,
**dadurch gekennzeichnet,** daß die physikalische Struktur des Kunststoffes in dem Bereich durch eine örtliche Erwärmung abgeändert wird, die erreicht wird, indem dieser Bereich mit Hilfe eines konzentrierten Bündels von IR-Strahlen mit einer Wellenlänge zwischen 1,2 und 12 »m, die von einer Laser-Quelle erzeugt werden, bestrichen wird, und daß die Leistung und die Geschwindigkeit des Bestreichens durch das Bündel derart eingestellt werden, daß die Temperatur der Wandung in dem schmalen linearen Bereich in einen Temperaturbereich gebracht wird, in dem der Kristallisationsgrad des Kunststoffes erhöht wird.

33. Verfahren nach Anspruch 32,
**dadurch gekennzeichnet,** daß die Wellenlänge des konzentrierten Bündels von IR-Strahlen vorzugsweise zwischen 10 und 12 »m liegt.

34. Verfahren nach Anspruch 32,
**dadurch gekennzeichnet,** daß die Wellenlänge des Bündels von IR-Strahlen vorzugsweise zwischen 1,6 und 1,7 »m liegt.
